# EUROPEAN PATENT APPLICATION

(11) **EP 4 787 804 A1**
(43) Date of publication of application: **05.08.2026**
(21) Application number: 25220738.6
(22) Date of filing: 04.12.2025
(51) Int. Cl.: H04L 45/0377, H04L 45/64, H04L 45/745, H04L 45/76, H04L 45/85

(54) **MULTI-TENANTED SERVICE FABRIC THROUGH SDWAN**

(30) Priority: 29.01.2025 US 202519040056
(71) Applicant: Cisco Technology, Inc., San Jose, CA 95134 (US)
(72) Inventor: TANGIRALA, Srilatha, San Jose, CA, 95135 (US); GILL, Ajeet, Pal Singh, Fremont, CA, 94539 (US); BARUAH, Pritam, Fremont, CA, 94555 (US); SHAH, Avinash, Pleasanton, CA, 94588 (US); DEVENDRACHAR, Ganesh, Milpitas, CA, 95035 (US)
(74) Representative: Mathys & Squire

(57) **Abstract**

In one aspect, a method for routing traffic using a multi-tenanted service hub includes: receiving, by the multi-tenanted service hub of a network, a first communication from a first tenant of a shared edge device, where metadata associated with the first communication includes a first source VPN and a service label, determining, by the multi-tenanted service hub, a first tenant ID based on metadata associated with a first tunnel from the shared edge device to the multi-tenanted service hub, querying, by the multi-tenanted service hub, a mapping table using the first source VPN and the first tenant ID to retrieve a device VPN, where the device VPN is a multi-tenanted VPN of the network, and forwarding, by the multi-tenanted service hub, the first communication using the device VPN, where the device VPN corresponds to a service label maps to a service chain.

## Description

### BACKGROUND

Some service fabric providers can support service fabric with dedicated tenant edges providing dedicated service fabric. However, current implementations of a service fabric may only support use cases with dedicated wide-area network (WAN) edge devices, e.g., single-tenant edge devices. Thus, to onboard a new tenant, a service provider will need to install a dedicated router per tenant at the service location and generate one or more service chains for the tenant.

### OVERVIEW

Aspects of the invention are set out in the independent claims and preferred features are set out in the dependent claims. Features of one aspect may be applied to each aspect alone or in combination with other features.

### BRIEF DESCRIPTION OF THE SEVERAL VIEWS OF THE DRAWINGS

Details of one or more aspects of the subject matter described in this disclosure are set forth in the accompanying drawings and the description below. However, the accompanying drawings illustrate only some typical aspects of this disclosure and are therefore not to be considered limiting of its scope. Other features, aspects, and advantages will become apparent from the description, the drawings and the claims.
FIG. 1 illustrates an example communication network including one or more autonomous systems (ASes) in accordance with some aspects of the present disclosure.
FIG. 2 illustrates an example of a high-level network architecture in accordance with some aspects of the present disclosure.
FIG. 3A illustrates an example environment for routing traffic from a single-tenant edge device via a multi-tenant service hub environment in accordance with some aspects of the present disclosure.
FIG. 3B illustrates an example environment for routing traffic to a single-tenant edge device via a multi-tenant service hub environment in accordance with some aspects of the present disclosure.
FIG. 4A illustrates an example environment for routing traffic from a multi-tenant edge device via a multi-tenant service hub environment in accordance with some aspects of the present disclosure.
FIG. 4B illustrates an example environment for routing traffic to a multi-tenant edge device via a multi-tenant service hub environment in accordance with some aspects of the present disclosure.
FIG. 5A illustrates an example graphical user interface (GUI) for selecting a service chain for a tenant's dedicated virtual private network (VPN) in accordance with some aspects of the present disclosure.
FIG. 5B illustrates another example GUI for selecting a service chain for a tenant's shared VPN in accordance with some aspects of the present disclosure.
FIG. 6 illustrates a method for implementing a multi-tenant service fabric in accordance with some aspects of the present disclosure.
FIG. 7 illustrates a method for routing traffic using a multi-tenanted service hub in accordance with some aspects of the present disclosure.
FIG. 8 shows an example network device in accordance with some aspects of the present disclosure.

### DETAILED DESCRIPTION

The detailed description set forth below is intended as a description of various configurations of embodiments and is not intended to represent the only configurations in which the subject matter of this disclosure can be practiced. The appended drawings are incorporated herein and constitute a part of the detailed description. The detailed description includes specific details for the purpose of providing a more thorough understanding of the subject matter of this disclosure. However, it will be clear and apparent that the subject matter of this disclosure is not limited to the specific details set forth herein and may be practiced without these details. In some instances, structures and components are shown in block diagram form in order to avoid obscuring the concepts of the subject matter of this disclosure.

Various embodiments of the disclosure are discussed in detail below. While specific implementations are discussed, it should be understood that this is done for illustration purposes only. A person skilled in the relevant art will recognize that other components and configurations may be used without parting from the scope of the disclosure as defined in the claims. Thus, the following description and drawings are illustrative and are not to be construed as limiting. Numerous specific details are described to provide a thorough understanding of the disclosure. However, in certain instances, well-known or conventional details are not described in order to avoid obscuring the description. References to one or an embodiment in the present disclosure can be references to the same embodiment or any embodiment; and such references mean at least one of the embodiments.

Reference to "one embodiment" or "an embodiment" means that a particular feature, structure, or characteristic described in connection with the embodiment is included in at least one embodiment of the disclosure. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others.

As used herein the term "configured" shall be considered to interchangeably be used to refer to configured and configurable, unless the term "configurable" is explicitly used to distinguish from "configured". The proper understanding of the term will be apparent to persons of ordinary skill in the art in the context in which the term is used.

Claim language or other language reciting "at least one of" a set and/or "one or more" of a set indicates that one member of the set or multiple members of the set (in any combination) satisfy the claim. For example, claim language reciting "at least one of A and B" or "at least one of A or B" means A, B, or A and B. In another example, claim language reciting "at least one of A, B, and C" or "at least one of A, B, or C" means A, B, C, or A and B, or A and C, or B and C, or A and B and C. The language "at least one of" a set and/or "one or more" of a set does not limit the set to the items listed in the set. For example, claim language reciting "at least one of A and B" or "at least one of A or B" can mean A, B, or A and B, and can additionally include items not listed in the set of A and B.

The terms used in this specification generally have their ordinary meanings in the art, within the context of the disclosure, and in the specific context where each term is used. Alternative language and synonyms may be used for any one or more of the terms discussed herein, and no special significance should be placed upon whether or not a term is elaborated or discussed herein. In some cases, synonyms for certain terms are provided. A recital of one or more synonyms does not exclude the use of other synonyms. The use of examples anywhere in this specification including examples of any terms discussed herein is illustrative only and is not intended to further limit the scope and meaning of the disclosure or of any example term. Likewise, the disclosure is not limited to various embodiments given in this specification.

Without intent to limit the scope of the disclosure, examples of instruments, apparatus, methods and their related results according to the embodiments of the present disclosure are given below. Note that titles or subtitles may be used in the examples for convenience of a reader, which in no way should limit the scope of the disclosure. Unless otherwise defined, technical and scientific terms used herein have the meaning as commonly understood by one of ordinary skill in the art to which this disclosure pertains. In the case of conflict, the present document, including definitions will control.

Additional features and advantages of the disclosure will be set forth in the description which follows, and in part will be obvious from the description, or can be learned by practice of the herein disclosed principles. The features and advantages of the disclosure can be realized and obtained by means of the instruments and combinations particularly pointed out in the appended claims. These and other features of the disclosure will become more fully apparent from the following description and appended claims, or can be learned by the practice of the principles set forth herein.

### OVERVIEW

Aspects of the present disclosure facilitate the implementation and use of a multi-tenant service hub to route traffic based on device VPNs shared by multiple tenants. A multi-tenant service hub can enable onboarding of a tenant to a shared device without the installation of additional equipment when onboarding the tenant. In a network supporting a multi-tenanted service fabric, aspects of the present disclosure describe both control plane and data plane modifications that enable the network to support the multi-tenanted service fabric.

In some aspects, a method for routing traffic using a multi-tenanted service hub includes receiving, by the multi-tenanted service hub of a network, a first communication from a first tenant of a shared edge device, wherein metadata associated with the first communication includes a first source VPN and a service label; determining, by the multi-tenanted service hub, a first tenant ID based on metadata associated with a first tunnel from the shared edge device to the multi-tenanted service hub; querying, by the multi-tenanted service hub, a mapping table using the first source VPN and the first tenant ID to retrieve a device VPN, wherein the device VPN is a multi-tenanted VPN of the network; and forwarding, by the multi-tenanted service hub, the first communication using the device VPN, wherein the device VPN corresponds to a service label maps to a service chain.

In some aspects, the service chain is shared by a set of tenants of the shared edge device.

In some aspects, the method also includes receiving, by the multi-tenanted service hub, a second communication from a second tenant of the shared edge device, where metadata associated with the second communication comprises a second source VPN and the service label; determining, by the multi-tenant service hub, a second tenant ID based on metadata associated with a second tunnel from the shared edge device to the multi-tenanted service hub; querying, by the multi-tenanted service hub, the mapping table using the second source VPN and the second tenant ID to retrieve the device VPN; and forwarding, by the multi-tenanted service hub, the second communication based on the service chain using the device VPN.

In some aspects, the mapping table includes an edge device type attribute, where a value of the edge device type attribute indicates whether an edge device of the network is shared among multiple tenants.

In some aspects, metadata associated with a tunnel between an edge device and the multi-tenanted service hub includes a transport attribute, where a value of the transport attribute indicates whether the edge device is shared among multiple tenants.

In some aspects, the method also includes storing, by the multi-tenanted service hub in a flow table, a record associated with the first communication where the record includes the device VPN, the first tenant VPN, and the first tenant ID; and embedding, by the multi-tenanted service hub, the device VPN as a source VPN in the metadata associated with the first communication.

In some aspects, the method also includes receiving, by the multi-tenanted service hub, a third communication from a service of the network in response to the first communication, where metadata associated with the third communication comprises the first tenant ID and the device VPN; querying, by the multi-tenanted service hub, the flow table using the device VPN and the first tenant ID to retrieve the first tenant VPN; and forwarding, by the multi-tenanted service hub, the third communication using the first tenant VPN.

In some aspects, the method also includes receiving, by the multi-tenanted service hub, a request to onboard the first tenant, where the request is to associate the first tenant with the device VPN; and storing, by the multi-tenanted service hub, a tenant record in the mapping table associating the first tenant VPN and the first tenant ID with the device ID.

In another aspect, a multi-tenanted service hub of a network includes at least one memory configured to store computer-readable instructions, and one or more processors configured to execute the computer-readable instructions to: receive a first communication from a first tenant of a shared edge device, where metadata associated with the first communication includes a first source VPN and a service label; determine a first tenant ID based on metadata associated with a first tunnel from the shared edge device to the multi-tenanted service hub; query a mapping table using the first source VPN and the first tenant ID to retrieve a device VPN, where the device VPN is a multi-tenanted VPN of the network; and forward the first communication using the device VPN, where the device VPN corresponds to a service label maps to a service chain.

In another aspect, one or more non-transitory computer-readable storage media include computer-readable instructions that, when executed by one or more processors of a multi-tenanted service hub of a network, cause the multi-tenanted service hub to: receive a first communication from a first tenant of a shared edge device, where metadata associated with the first communication includes a first source VPN and a service label; determine a first tenant ID based on metadata associated with a first tunnel from the shared edge device to the multi-tenanted service hub; query a mapping table using the first source VPN and the first tenant ID to retrieve a device VPN, where the device VPN is a multi-tenanted VPN of the network; and forward the first communication using the device VPN, where the device VPN corresponds to a service label maps to a service chain.

The disclosed technology addresses the need in the art for sharing a service fabric across tenants on a shared device. The disclosed technology can solve problems occurring within multi-tenanted shared services where tenants are using an SDWAN to connect to the multi-tenanted shared service. For example, tenants of shared services or shared devices may assign ranges of IP addresses that overlap with the IP addresses of another tenant. This can cause difficulties for SDWAN devices in routing traffic through the network to and from shared devices, which can lead to routing inconsistencies and potential network outages.

The disclosed technology addresses this problem by providing enhancements to the control plane and the data plane of a network such that network devices can resolve shared tenant VPNs. For example, the disclosed technology facilitates the implementation of both shared and dedicated service chains and resolution of shared VPNs through the use of additional attributes (e.g., transport attributes or mapping table attributes) as well as packet metadata to accurately route network traffic among shared VPNs. The disclosed technology also provides enhancements to the tenant onboarding process, as new tenants do not require additional equipment installation at the service provider location. Advantages of the disclosed technology include reduced overhead, streamlined tenant onboarding, and efficient packet handling.

### EXAMPLE EMBODIMENTS

Disclosed systems and methods can be used for resolving shared tenant VPNs and configuring a service fabric for each tenant on a shared device. For example, each tenant, or customer, of the service provider can go through an onboarding process to define the tenant's service fabric configuration. The service fabric configuration can include one or more service chains, each of which can include an ordered set of one or more services. During onboarding, each tenant can also define a policy that should use any selected service chains. Thus, during traffic routing, a network controller can resolve service fabric labels associated with service chains so that an edge device can forward traffic to the correct service chain (e.g., the service chain identified during the onboarding process) in the fabric based on a policy match in a lookup table.

Currently, many service providers support dedicated VPNs per tenant. For example, each available VPN is assigned to a tenant in a one-to-one relationship. That is, currently a VPN is mapped to a tenant, but a tenant can have multiple VPNs. Table 1, shown below, illustrates a conventional mapping table uniquely mapping a tenant ID or tenant VPN to a device VPN.

**Table 1**

| **Tenant ID** | **Tenant VPN** | **Device VPN** |
|---|---|---|
| Tenant_1 | 1 | 1 |
| Tenant_2 | 1 | 2 |

In Table 1, Tenant_1 maps to device VPN 1, while Tenant_2 maps to device VPN 2. Thus, when an additional tenant is added, a new device must also be added. For example, each device in this case can be a single tenant (ST) device.

Disclosed systems and methods provide a mapping table for storing an additional value indicating whether a VPN is shared by multiple tenants. Table 2, shown below, illustrates a mapping table for a multi-tenant service hub.

**Table 2**

| **Tenant ID** | **Tenant VPN** | **Device VPN** | **Type** |
|---|---|---|---|
| Tenant_1 | 1 | 1 | dedicated |
| Tenant_2 | 1 | 2 | dedicated |
| Tenant_1 | 65510 | 65510 | shared |
| Tenant_2 | 65510 | 65510 | shared |

In Table 2, the additional field of "type" is included where type can either be "dedicated" or "shared." A dedicated device can refer to a single-tenant_1 device configured to serve only one tenant of the service provider. A shared device can be a multi-tenant, or multi-tenant-capable, device configured to serve at least one tenant of the service provider. Accordingly, as shown in Table 2, Tenant_1 and Tenant_2 Tenant_1, VPN 1 maps to a dedicated VPN 1 on the device and Tenant_2, VPN 1 maps to a dedicated VPN 2 on the device. Tenant_1, VPN 65510 and Tenant_2, VPN 65510 map to a shared device VPN 65510 as indicated by the values for "Tenant VPN" and "Device VPN." The mapping table distinguishes between the type of each device VPN based on the value of the "Type" column for each tenant.

In the case of the shared device VPN, services for both tenants are able to exist on the same VPN, which allows services to be shared among tenants. This obviates the need for a service provider to install a new router at the service location for each new tenant during onboarding. Further, during the onboarding process, the service chains associated with each tenant can be selected from pre-created service chains, thereby streamlining the onboarding and configuration processes. Depending on the intent of each service chain, a shared VPN or a dedicated VPN can be selected for hosting the service chain.

A computer network is a geographically distributed collection of nodes interconnected by communication links and segments for transporting data between end nodes, such as personal computers and workstations, or other network devices, such as sensors, etc. Many types of networks are available, ranging from local area networks (LANs) to wide area networks (WANs). LANs typically connect the nodes over dedicated private communications links located in the same general physical location, such as a building or campus. WANs, on the other hand, typically connect geographically dispersed nodes over long-distance communications links. The Internet is an example of a WAN that connects disparate networks throughout the world, providing global communication between nodes on various networks. The nodes typically communicate over the network by exchanging discrete frames or packets of data according to predefined protocols, such as the Transmission Control Protocol/Internet Protocol (TCP/IP). In this context, a protocol consists of a set of rules defining how the nodes interact with each other.

Since management of interconnected computer networks can prove burdensome, smaller groups of computer networks may be maintained as routing domains or autonomous systems. An Autonomous System (AS) is a network or group of networks under common administration and with common routing policies. A typical example of an AS is a network administered and maintained by an Internet Service Provider (ISP). Customer networks, such as universities or corporations, connect to the ISP, and the ISP routes the network traffic originating from the customer networks to network destinations that may be in the same ISP or may be reachable only through other ISPs.

To facilitate the routing of network traffic through one or more ASes, the network elements of the ASes need to exchange routing information to various network destinations. Border Gateway Protocol (BGP) is an Exterior Gateway Protocol (EGP) that is used to exchange routing information among network elements (e.g., routers) in the same or different ASes. A computer host that executes a BGP process is typically referred to as a BGP host or a BGP network device. To exchange BGP routing information, two BGP hosts, or peers, first establish a transport protocol connection with one another. Initially, the BGP peers exchange messages to open a BGP session, and, after the BGP session is open, the BGP peers exchange their entire routing information. Thereafter, only updates or changes to the routing information are exchanged, or advertised, between the BGP peers. The exchanged routing information is maintained by the BGP peers during the existence of the BGP session.

The networks within an AS are typically coupled together by conventional "intradomain" routers configured to execute intradomain routing protocols, and are generally subject to a common authority. To improve routing scalability, a service provider (e.g., an ISP) may divide an AS into multiple "areas" or "levels." It may be desirable, however, to increase the number of nodes capable of exchanging data; in this case, interdomain routers executing interdomain routing protocols are used to interconnect nodes of the various ASes. Moreover, it may be desirable to interconnect various ASes that operate under different administrative domains. As used herein, an AS, area, or level is generally referred to as a "domain."

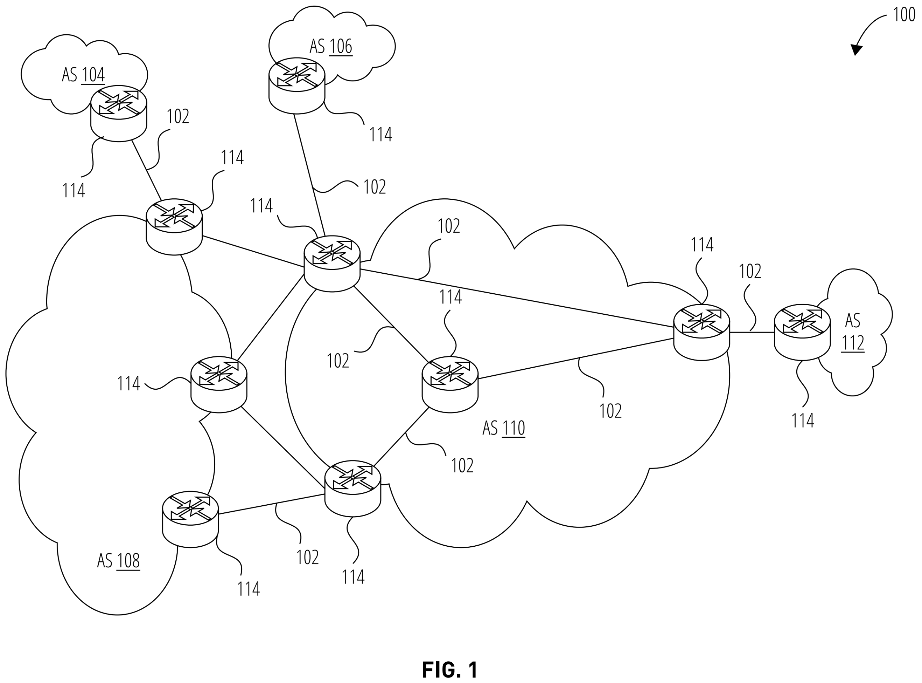

FIG. 1 illustrates an example communication network including one or more autonomous systems (ASes) in accordance with some aspects of the present disclosure. FIG. 1 is a schematic block diagram of an example communication network 100. Communication network 100 may include a set of autonomous systems (AS) such as AS 104, AS 106, AS 108, AS 110, and AS 112. Each AS may be associated with one or more network devices such as network devices 114 interconnected by various methods of communication. For instance, links 102 may be any suitable combination of wired links and shared media (e.g., wireless links, Internet Exchange Points, etc.) via which network devices 114 may be connected to one another. Network devices 114 may be any type of known or to be developed device capable of connecting to and operating in a network including, but not limited to, routers, computers, etc. Configuration of communication network 100 and consequently types and numbers of network devices 114 and links 102, as shown in FIG. 1, are merely exemplary and shown in a simplified manner for ease of understanding and thus are non-limiting.

Data packets (e.g., traffic and/or messages sent between network devices 114) may be exchanged among network devices 114 of communication network 100 using known or to be developed network communication protocols (e.g., wired and/or wireless protocols, shared-media protocols, etc.)

Communication network 100 may be positioned in any suitable network environment or communications architecture that operates to manage or otherwise direct information using any appropriate routing protocol or data management standard. For example, communication network 100 may be provided in conjunction with a border gateway protocol (BGP).

As noted above, an AS may be a collection of connected Internet Protocol (IP) routing network devices such as network devices 114 under the control of one or more network operators that presents a common, clearly defined routing policy to a network (e.g., the Internet). Usually, an AS comprises network devices 114 that are established on the edge of the system, and that serve as the system's ingress and egress points for network traffic. Accordingly, network devices 114 may be considered edge network devices, border routers, or core network devices within the respective AS. These network devices typically, but not always, are routers or any other element of network infrastructure suitable for switching or forwarding data packets according to a routing protocol or switching protocol. For the purposes of the present disclosure, network devices 114 located within an AS may alternatively be referred to as "forwarding network devices" or "intermediate network devices." Moreover, for illustration purposes, AS 104, AS 106, AS 108, AS 110, and AS 112 are shown with a limited number of network devices 114. However, the present disclosure is not limited thereto, and each AS may include more or less network devices than that shown in FIG. 1.

Each one of AS 104, AS 106, AS 108, AS 110, and AS 112 may be associated with an Internet Service provider (ISP). Even though there may be multiple ASes supported by a single ISP, the Internet only sees the routing policy of the ISP. That ISP must have an officially registered Autonomous System Number (ASN). As such, a unique ASN is allocated to each AS for use in BGP routing. ASNs are important primarily because they uniquely identify each network on the Internet.

To facilitate the routing of network traffic through the ASes, or more specifically, network devices 114 within the ASes, the network devices may exchange routing information to various network destinations. As described above, BGP may be used to exchange routing and reachability information among network devices 114 within a single AS or between different ASes. One example of BGP is BGPv4, as defined in Request for Comments (RFC) 1771 of the Internet Engineering Task Force (IETF). The BGP logic of a router may be used by the data collectors to collect BGP AS path information, e.g., the "AS_PATH" attribute, as described further below, from BGP tables of border routers of an AS, to construct paths to prefixes.

To exchange BGP routing information, two BGP hosts (network devices 114), or peers, first establish a transport protocol connection with one another. Initially, the BGP peers exchange messages to open a BGP session, and, after the BGP session is open, the BGP peers exchange their entire routing information. Thereafter, in certain embodiments, only updates or changes to the routing information, e.g., the "BGP UPDATE" attribute, are exchanged, or advertised, between the BGP peers. The exchanged routing information is maintained by the BGP peers during the existence of the BGP session.

The BGP routing information may include the complete route to each network destination, e.g., "destination network device," that is reachable from a BGP host. A route, or path, comprises an address destination, which is usually represented by an address prefix (also referred to as prefix), and information that describe the path to the address destination. The address prefix may be expressed as a combination of a network address and a mask that indicates how many bits of the address are used to identify the network portion of the address. In Internet Protocol version 4 (IPv4) addressing, for example, the address prefix can be expressed as "9.2.0.2/16". The "/16" indicates that the first 16 bits are used to identify the unique network leaving the remaining bits in the address to identify the specific hosts within this network.

A path joining a plurality of ASes, e.g., links 102, may be referred to as an "AS_PATH." The AS_PATH attribute indicates the list of ASes that must be traversed to reach the address destination. For example, as illustrated in FIG. 1, AS 112 may store an AS_PATH attribute of "104 106 110 112" where the address destination is AS 112 (or a particular IP address within AS 112). Here, the AS_PATH attribute indicates that the path to the address destination of AS 112 from AS 108 passes through AS 104, AS 106 and AS 110, in that order.

Although it may be preferable that all network devices 114 in the respective one of AS 104, AS 106, AS 108, AS 110, and AS 112 be configured according to BGP, in a real-world implementation, it may be unlikely that each network device communicates using BGP. Thus, the disclosed embodiments are applicable to scenarios where all network devices 114 in the communication network 100 are configured according to BGP, as well as scenarios where only a subset of network devices 114 is/are configured as such. Moreover, between any of the ASes, there may be a single communication path via one of links 102, e.g., between AS 104 and AS 108, as shown in FIG. 1, or there may be multiple communication paths via links 102, e.g., between AS 108 and AS 110. Thus, the disclosed examples are applicable to both cases, as described in further detail below.

Moreover, a security extension to the BGP has been developed, referred to as BGPSEC, which provides improved security for BGP routing. BGP does not include mechanisms that allow an AS to verify the legitimacy and authenticity of BGP route advertisements. The Resource Public Key Infrastructure (RPKI) provides a first step towards addressing the validation of BGP routing data. BGPSEC extends the RPKI by adding an additional type of certificate, referred to as a BGPSEC router certificate, that binds an AS number to a public signature verification key, the corresponding private key of which is held by one or more BGP speakers within this AS. Private keys corresponding to public keys in such certificates can then be used within BGPSEC to enable BGP speakers to sign on behalf of their AS. The certificates thus allow a relying party to verify that a BGPSEC signature was produced by a BGP speaker belonging to a given AS. Thus, a goal of BGPSEC is to use signatures to protect the AS Path attribute of BGP update messages so that a BGP speaker can assess the validity of the AS Path in update messages that it receives. It should be understood, however, that the embodiments for implementing AS Path security disclosed herein are not limited to BGPSEC; certain embodiments may, additionally or alternatively, be applicable to other suitable protocols, including, for example, SoBGP, S-BGP, and PGPBGP, to name just a few.

Furthermore, the present disclosure is not limited to BGPv4 or more generally BGP being used for exchanging route and reachability information. Any other known or to be developed route and reachability information exchange mechanism and protocol may be used and thus falls within the scope of the present disclosure.

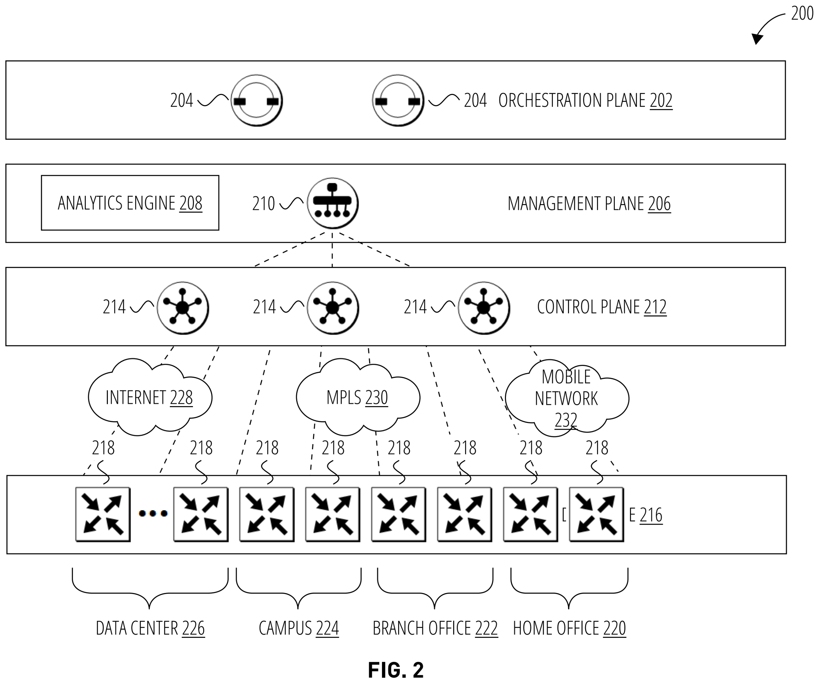

FIG. 2 illustrates an example of a high-level network architecture in accordance with some aspects of the present disclosure. A non-limiting example of an implementation of network architecture 200 shown in FIG. 2 is the Cisco^{®} SD-WAN architecture. However, one of ordinary skill in the art will understand that, for network architecture 200 and any other system discussed in the present disclosure, there can be additional or fewer component in similar or alternative configurations. The illustrations and examples provided in the present disclosure are for conciseness and clarity. Other embodiments may include different numbers and/or types of elements but one of ordinary skill the art will appreciate that such variations do not depart from the scope of the present disclosure.

In this example, network architecture 200 can comprise an orchestration plane 202, a management plane 206, a control plane 212, and a data plane 216. Orchestration plane 202 can assist in the automatic on-boarding of edge network devices 218 (e.g., switches, routers, etc.) in an overlay network. Orchestration plane 202 can include one or more physical or virtual network orchestrator appliances such as network orchestrator appliances 204. Network orchestrator appliances 204 can perform the initial authentication of edge network devices 218 and orchestrate connectivity between devices of control plane 212 and data plane 216. In some examples, network orchestrator appliances 204 can also enable communication of devices located behind Network Address Translation (NAT). In some embodiments, physical or virtual Cisco^{®} SD-WAN vBond appliances can operate as network orchestrator appliances 204.

Management plane 206 can be responsible for central configuration and monitoring of a network. Management plane 206 can include analytics engine 208 and one or more physical or virtual network management appliances such as network management appliances 210. In some examples, network management appliances 210, based on one or more outputs of analytics engine 208, can provide centralized management of the network via a graphical user interface to enable a user to monitor, configure, and maintain edge network devices 218 and links (e.g., internet transport network 228, MPLS network 230, 4G/Mobile network 232) in an underlay and overlay network. Network management appliances 210 can support multi-tenancy and enable centralized management of logically isolated networks associated with different entities (e.g., enterprises, divisions within enterprises, groups within divisions, etc.). Alternatively or in addition, network management appliances 210 can be a dedicated network management system for a single entity. In some embodiments, physical or virtual Cisco^{®} SD-WAN vManage appliances can operate as network management appliances 210.

Control plane 212 can build and maintain a network topology and make decisions on where traffic flows. Control plane 212 can include one or more physical or virtual network control appliances such as network control appliances 214. Network control appliances 214 can establish secure connections to each edge network device 218 and distribute route and policy information via a control plane protocol (e.g., Overlay Management Protocol (OMP) (discussed in further detail below), Open Shortest Path First (OSPF), Intermediate System to Intermediate System (IS-IS), Border Gateway Protocol (BGP), Protocol-Independent Multicast (PIM), Internet Group Management Protocol (IGMP), Internet Control Message Protocol (ICMP), Address Resolution Protocol (ARP), Bidirectional Forwarding Detection (BFD), Link Aggregation Control Protocol (LACP), etc.). In some examples, network control appliances 214 can operate as route reflectors. Network control appliances 214 can also orchestrate secure connectivity in data plane 216 between and among edge network devices 218. For example, in some embodiments, network control appliances 214 can distribute crypto key information among edge network devices 218. This can allow the network to support a secure network protocol or application (e.g., Internet Protocol Security (IPSec), Transport Layer Security (TLS), Secure Shell (SSH), etc.) without Internet Key Exchange (IKE) and enable scalability of the network. In some embodiments, physical or virtual Cisco^{®} SD-WAN vSmart controllers can operate as network control appliances 214.

In some examples, disclosed systems and methods can enhance the control plane 212 to facilitate visibility into whether each of edge network devices 218 is capable of functioning as a shared device. For example, a new attribute for device type can be introduced (e.g., in OMP) that can be used in information exchange amongst devices. This new attribute can be included in a transport locator (TLOC) of each of edge network device 218. The TLOC for an exemplary edge device can include the attribute "ATTR_TYPE_SHARED" where a value of "0" indicates the TLOC (and therefore the edge device) is not shared and a value of "1" indicates the TLOC is shared. In some cases, ATTR_TYPE_SHARED may be set to "0" as a default value.

Network control appliance 214 may have knowledge of or visibility into properties of edge network devices 218, as described in United States Patent No. 11,962,429, entitled "Sharing transport interfaces between tenants on multi-tenant edge devices," and granted on April 16, 2024, which is assigned to Cisco Technologies Inc.. Network control appliance 214 can advertise edge network devices 218 to each other and other devices of the network architecture 200. If the TLOC being advertised by network control appliance 214 was originated at a multi-tenant-capable device, then ATTR_TYPE_SHARED for the TLOC is set to "1." Otherwise, ATTR_TYPE_SHARED retains the default value of "0," indicating that the TLOC originated at a single-tenant device. Thus, a peer edge device receiving information from network control appliance 214 will receive information about whether other devices of edge network devices 218 are shared or not. Further, if the TLOC received at network control appliance 214 is shared, a bidirectional forwarding detection (BFD) and/or Internet protocol security (IPSec) tunnel formed from network control appliance 214 to the multi-tenant-capable edge network device 218 is labelled as "shared," indicating that the tunnel will transfer packets from the multi-tenant-capable edge network device 218 to a multi-tenant service hub and that the tunnel can carry data from multiple tenants.

In some examples, disclosed systems and methods can also enable per-tenant service fabric or service chain resolution using OMP. For example, a multi-tenant service hub can advertise a service chain depending on which tenant the service chain belongs to. A dedicated service chain that can only be used by a single tenant may be advertised by the multi-tenant service hub only in the dedicated tenant's overlay. For a shared service chain, the multi-tenant service hub can advertise the service chain for all tenants sharing the service. Edge network devices 218 sharing a service chain will reference the same service label, such that the tenant ID and tenant VPN ID combinations can be mapped, using the service label, to the same service chain. The shared service chains can avoid confusion in traffic isolation since tenant traffic handling may be based on the traffic-originating device and/or source VPN in a packet header or metadata.

Data plane 216 can be responsible for forwarding packets based on decisions from control plane 212. Data plane 216 can include edge network devices 218, which can be physical or virtual edge network devices. Edge network devices 218 can operate at the edges various network environments of an organization, such as in one or more data centers 226, campus networks 224, branch office networks 222, home office networks 220, and so forth, or in the cloud (e.g., Infrastructure as a Service (IaaS), Platform as a Service (PaaS), SaaS, and other cloud service provider networks). Edge network devices 218 can provide secure data plane connectivity among sites over one or more WAN transports, such as via one or more internet transport networks 228 (e.g., Digital Subscriber Line (DSL), cable, etc.), MPLS networks 230 (or other private packet-switched network (e.g., Metro Ethernet, Frame Relay, Asynchronous Transfer Mode (ATM), etc.), mobile networks 232 (e.g., 3G, 4G/LTE, 5G, etc.), or other WAN technology (e.g., Synchronous Optical Networking (SONET), Synchronous Digital Hierarchy (SDH), Dense Wavelength Division Multiplexing (DWDM), or other fiber-optic technology; leased lines (e.g., T1/E1, T3/E3, etc.); Public Switched Telephone Network (PSTN), Integrated Services Digital Network (ISDN), or other private circuit-switched network; small aperture terminal (VSAT) or other satellite network; etc.). Edge network devices 218 can be responsible for traffic forwarding, security, encryption, quality of service (QoS), and routing (e.g., BGP, OSPF, etc.), among other tasks. In some embodiments, physical or virtual Cisco^{®} SD-WAN vEdge routers can operate as edge network devices 218.

Disclosed systems and methods can enhance data plane 216 by facilitating traffic handling at a multi-tenant service hub for service fabric applications per tenant. For example, network management appliance 210 can ensure that tenant VPN-to-device VPN mapping is present on all multi-tenant-capable devices of network architecture 200.

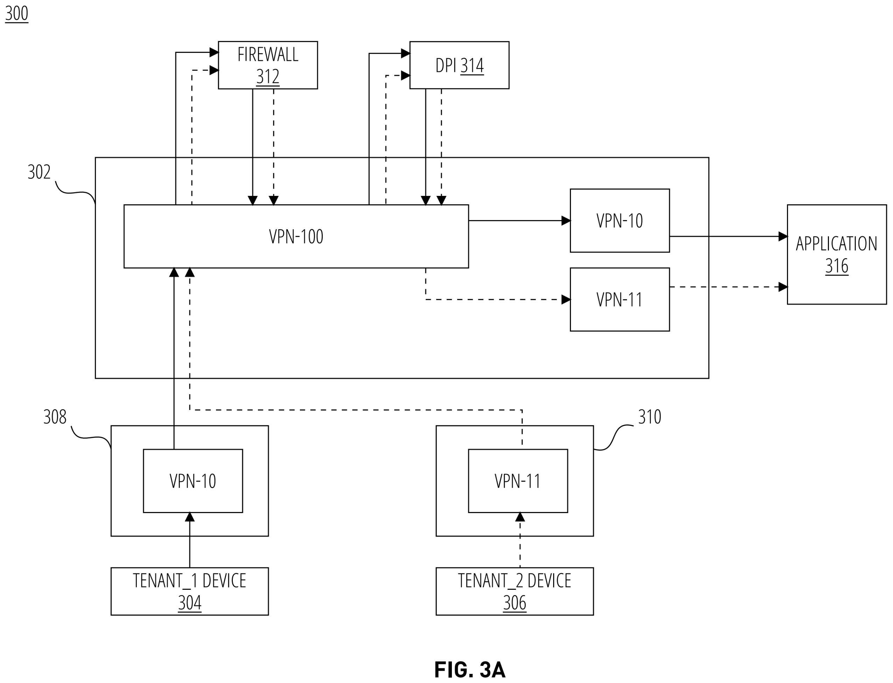

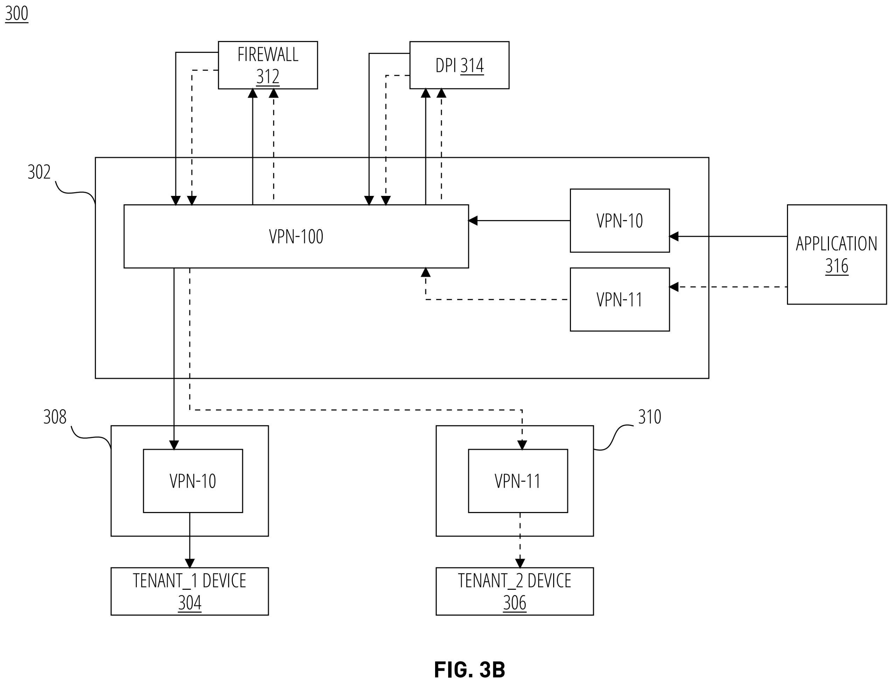

FIG. 3A and FIG. 3B illustrate an example environment 300 for implementing a multi-tenant service fabric via a data plane of a network. In some examples, the environment 300 can include a multi-tenant service hub 302, a tenant_1 device 304, and a tenant_2 device 306. Tenant_1 device 304 may be coupled to a single-tenant edge device 308 and tenant_2 device 306 may be coupled to a single-tenant edge device 310. In other examples, the environment 300 can include fewer or more components than illustrated in FIG. 3A and FIG. 3B. Multi-tenant service hub 302, tenant_1 device 304, tenant_2 device 306, single-tenant edge device 308, and single-tenant edge device 310 may be used within communication network 100 of FIG. 1 and/or network architecture 200 of FIG. 2.

In a first example, shown in FIG. 3A, multi-tenant service hub 302 may handle packets from a branch (e.g., tenant_1 device 304 and/or tenant_2 device 306) to multi-tenant service hub 302. A packet coming from a branch can generate a flow in a flow table of multi-tenant service hub 302. The flow table can be updated to store a VPN which unambiguously identifies a network segment per tenant. In other words, the flow table may store a device VPN as shown in example flow table, Table 3, shown below.

**Table 3**

| **Flow ID** | **Source VPN** |
|---|---|
| Flow-1 | VPN-10 |
| Flow-2 | VPN-11 |

For the example illustrated in FIG. 3A, the flow table may store a flow, or record, for each packet, or each communication, originating from each of single-tenant edge device 308 and single-tenant edge device 310, associated with tenant_1 device 304 and tenant_2 device 306, respectively. The multi-tenanted service hub 302 can store, in the flow table, a record associated with the communication or packet. In some examples, the multi-tenanted service hub 302 can embed the device VPN as a source VPN in the metadata associated with the first communication.

Accordingly, Table 3 may store a first flow (Flow-1) for a first packet where the first flow is associated with a source VPN (e.g., VPN-10), which is the tenant VPN of single-tenant edge device 308. Similarly, for a second packet originating from tenant_2 device 306, Table 3 may store a second flow (Flow-2) associated with the source VPN of the second packet (e.g., VPN-11). In some examples, to retrieve the device VPN of each of single-tenant edge device 308 and single-tenant edge device 310, the multi-tenant service hub 302 may query a mapping table based on the combination of tenant ID and the tenant source VPN to retrieve the device VPN associated with the tenant ID and tenant source VPN. In some examples, the multi-tenant service hub 302 may access the tenant ID for the TLOC based on an OMP connection with network control appliance 214, as discussed above with reference to FIG. 2.

Based on the service label or service chain indicated in the packet metadata, the first packet and the second packet can be processed by the multi-tenant service hub 302 according to a service chain associated with each of single-tenant edge device 308 and single-tenant edge device 310. In FIG. 3A, both tenant_1 device 304 and tenant_2 device 306 use the same service chain, routing packets from each device, via a shared VPN-100, to a firewall 312 and then through deep packet inspection (DPI) 314. Once the service chain processing is completed, the first packet and second packet can be routed, via the respective VPN-10 and VPN-11, to application 316.

FIG. 3B illustrates an example in which a packet is routed from a service (e.g., application 316) to a single-tenant device via multi-tenant service hub 302 in environment 300. In this example, multi-tenant service hub 302 may handle packets transmitted from a service in the service chain (e.g., application 316) to multi-tenant service hub 302. When a packet is received by multi-tenant service hub 302 from application 316, a reverse lookup can be performed on the flow table (e.g., Table 3) based on the packet contents or packet metadata to retrieve the device VPN of the destination device (e.g., tenant_1 device 304 or tenant_2 device 306). The tenant ID can be determined based on tunnel or interface metadata associated with the service chain that can be used to perform a lookup on the response packet from application 316.

Accordingly, for a packet sent from application 316 in response to the first packet of tenant_1 device 304, multi-tenant service hub 302 can use response packet metadata (e.g., tunnel or interface information) to determine a tenant ID for the intended receiving device of the response packet. The tenant ID can be used to determine a device VPN for routing the response packet to the appropriate single-tenant edge device.

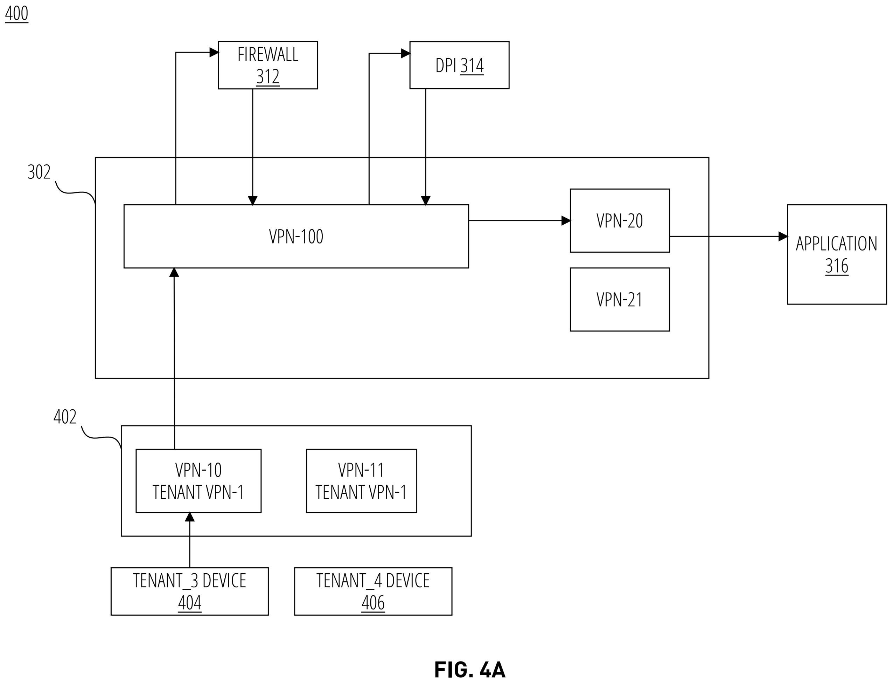

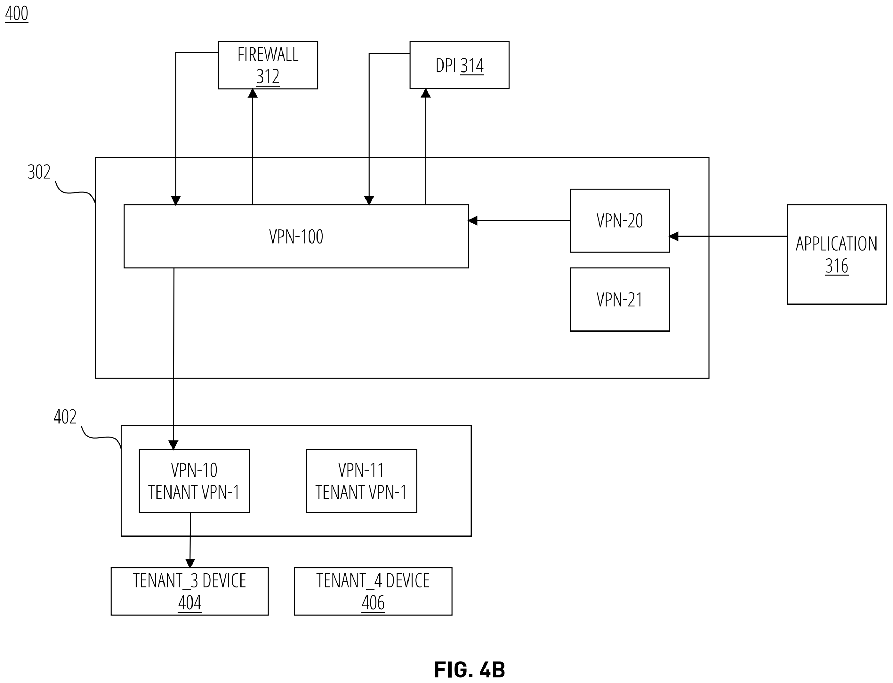

FIG. 4A and FIG. 4B illustrate an example environment 400 for implementing a multi-tenant service fabric via a data plane of a network. In some examples, the environment 400 can include a multi-tenant service hub 302, a tenant_3 device 404, and a tenant_4 device 406. Both tenant_3 device 404 and tenant_4 device 406 may be coupled to a multi-tenant edge device 402. In other examples, the environment 400 can include fewer or more components than illustrated in FIG. 4A and FIG. 4B. Multi-tenant service hub 302, tenant_3 device 404, tenant_4 device 406, and multi-tenant edge device 402 may be used within communication network 100 of FIG. 1 and/or network architecture 200 of FIG. 2 and/or environment 300 of FIG. 3A and FIG. 3B.

In a first example, shown in FIG. 4A, multi-tenant service hub 302 may handle packets from a branch (e.g., tenant_3 device 404) via a multi-tenant edge device 402 to multi-tenant service hub 302. A packet coming from multi-tenant edge device 402 can generate a flow in a flow table of multi-tenant service hub 302. An example flow table is shown below as Table 4.

**Table 4**

| **Flow ID** | **Source VPN** |
|---|---|
| Flow-3 | VPN-10 |
| Flow-4 | VPN-11 |

Table 4 may, for example, store a record with the device VPN as the source VPN, rather than the tenant VPN associated with tenant_3 device 404 and tenant_4 device 406. Further, multi-tenant service hub 302 can embed the device VPN as the source VPN in packet metadata. In this example, a mapping table for tenant_3 and tenant_4 is illustrated as Table 5 below.

**Table 5**

| **Tenant ID** | **Tenant VPN** | **Device VPN** |
|---|---|---|
| 3 | 1 | VPN-20 |
| 4 | 1 | VPN-21 |

Table 5 can be used to map tenants to a device VPN. In some examples, Table 5 can include a column for a service label associated with a service chain for routing packet traffic for each respective tenant.

In this example, a packet can be routed from tenant_3 device 404 via multi-tenant edge device 402 through a service chain including firewall 312, DPI 314, and application 316. AS the multi-tenant service hub 302 is routing the packet, it can use the mapping table (e.g., Table 5) to determine that for tenant 3 traffic should flow through VPN-20.

FIG. 4B illustrates an example in which a packet is routed from a service (e.g., application 316) to multi-tenant edge device 402 via multi-tenant service hub 302 in environment 400. In this example, multi-tenant service hub 302 may handle packets transmitted from a service in the service chain (e.g., application 316) to multi-tenant service hub 302. When a packet is received by multi-tenant service hub 302 from application 316, a reverse lookup can be performed on the flow table (e.g., Table 4) based on the packet contents or packet metadata to retrieve the device VPN of the destination device (e.g., tenant_3 device 404). The tenant ID can be determined based on tunnel or interface metadata associated with the service chain that can be used to perform a lookup on the response packet from application 316.

In this example, to avoid confusion from overlapping IP addresses of the multi-tenant edge device 402, the service (e.g., application 316) and multi-tenant service hub 302 may exchange a tenant context to be used in resolving overlapping IP addresses. For example, the tenant context can be included in a packet header as metadata. This tenant context can be used to identify a tenant that the packet belongs to.

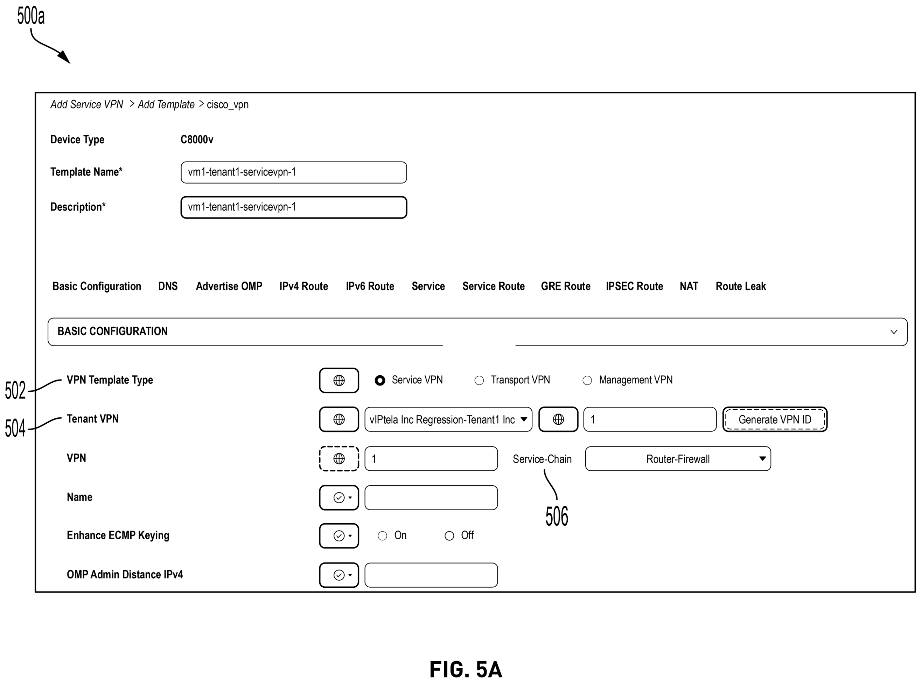

FIG. 5A illustrates an example GUI 500a for onboarding a device for a single tenant. GUI 500a can be used to onboard a tenant device by a service provider. GUI 500a can include functionality to receive input indicative of a VPN template type 502, a tenant VPN 504, and a service chain 506. In this example, the device can be a router capable of hosting multiple tenants. In other examples, the device could be any other network device or component, and can be a single-tenant device.

GUI 500a can be used to onboard a device and assign a tenant VPN to the device. For example, GUI 500a can be used to specify a VPN template type of "Service VPN," indicating that the device is being onboarded to a service provided by a service provider to the tenant. In this example, a user or administrator may be onboarding the device as a dedicated device VPN, used only by the tenant. Accordingly, the tenant VPN ID (e.g., the tenant VPN) can be set to "1." Thus, the combination of a tenant ID (e.g., an identifier of the tenant, such as tenant ID) and the tenant VPN ID of "1" can be stored in a mapping table of a network service hub (e.g., multi-tenant service hub 302) or controller and can associate the tenant with the onboarded device VPN 1.

In some examples, GUI 500a can also receive input indicating a service chain 506 (e.g., "Router-Firewall"). A lookup to the mapping table based on the tenant ID and tenant VPN ID can return the device VPN mapped to the service chain using a service label associated with a particular service chain available via the device VPN. Traffic at the onboarded device can then be routed through the network based on the service chain. In this example, "Router-Firewall" can indicate a service chain in which all traffic from the onboarded device is routed from the device to a firewall, prior to accessing a service or application associated with a service.

In this example, the selected service chain can be unique to the tenant being onboarded (e.g., the service chain was pre-created in the system and can only be used by the tenant). In other examples, the service chain can be selected from a set of service chains available via the onboarded device. Thus, the tenant can either use a shared service chain, or can generate and select a service chain created for use only by the particular tenant.

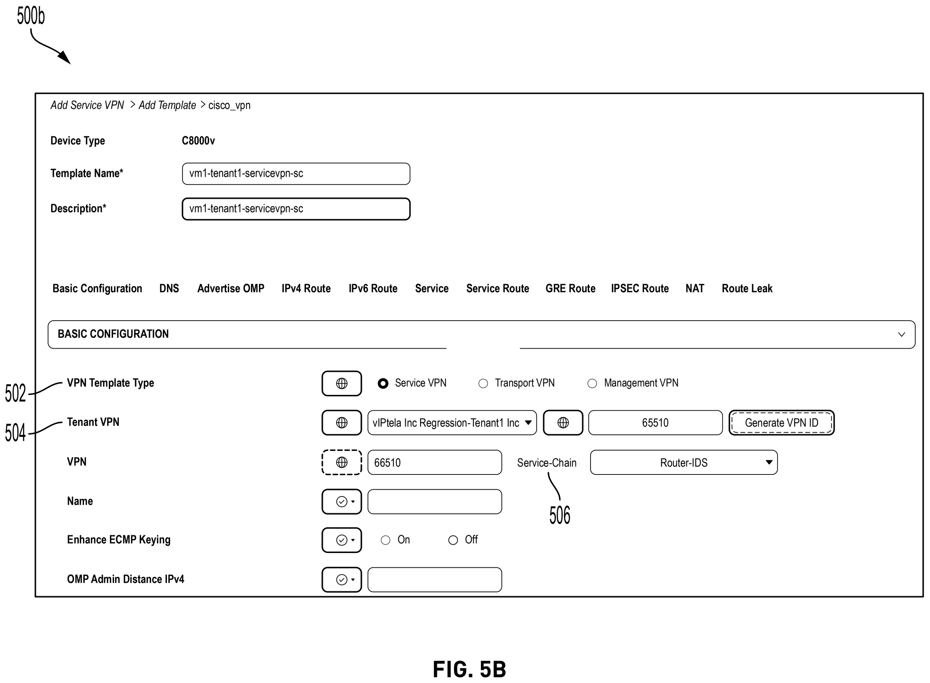

FIG. 5B illustrates an example GUI 500b for onboarding a device through which a tenant will use a shared VPN. GUI 500b can include functionality to receive input indicative of VPN template type 502, tenant VPN 504, and service chain 506. In this example, GUI 500b can be used to specify a VPN template type of "Service VPN," indicating that the device is being onboarded to a service provided by a service provider to the tenant.

As discussed above with reference to Table 2, a tenant VPN or tenant VPN ID that indicates a shared device can be stored in the mapping table as both the device VPN and tenant VPN. Thus, the shared device VPN can be determined based on a lookup to the mapping table using a tenant ID and tenant VPN ID (e.g., "65510"). When an additional tenant is onboarded, the additional tenant can also indicate tenant VPN ID 65510 and device VPN 66510. For example, during a reverse lookup, a tenant VPN can be determined based on the tenant ID and device VPN combination.

In the example illustrated in FIG. 5B, GUI 500b can receive input indicative of a service chain (e.g., a service label selected from a dropdown list of service labels associated with service chains available to tenants of the device being onboarded). The service chain "Router-IDS" can be stored in the mapping table such that traffic associated with the onboarded tenant ID and the tenant VPN ID can be routed from the router to an intrusion detection system (IDS) prior to being routed to an application provided by the service provider. In some examples, a tenant on a shared device can also create service chains that are dedicated to the tenant such that other tenants of the shared device cannot use one tenant's dedicated service chains. This facilitates customization of service chains for each tenant to enable flexible use of a shared device and enable tenant isolation.

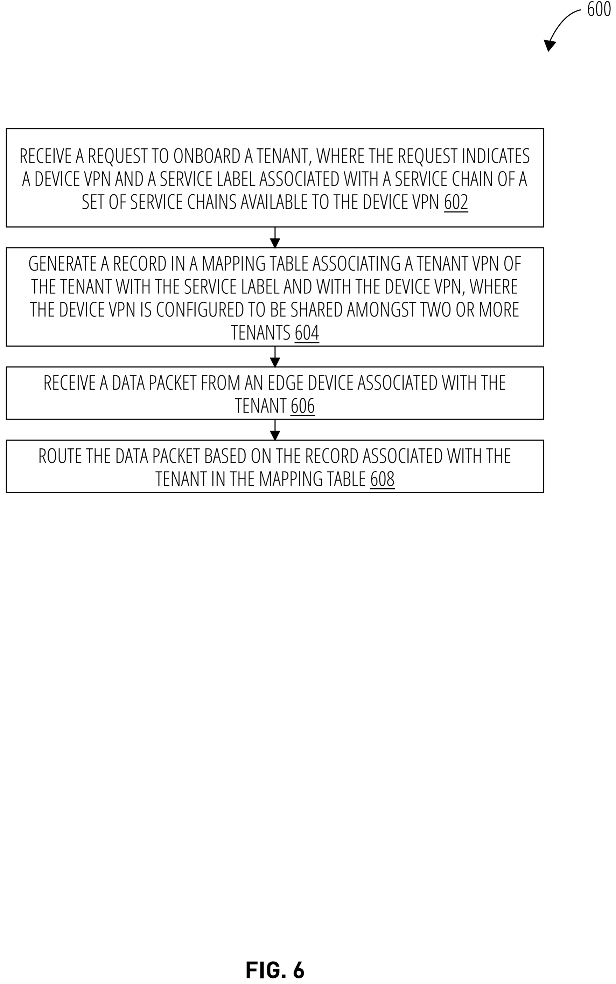

FIG. 6 will be described from the perspective of a multi-tenant service hub. It should be understood that such a multi-tenant service hub may have one or more memories having computer-readable instructions stored therein and one or more processors configured to execute the computer-readable instructions to perform steps of method 600 described below.

Furthermore, while multi-tenant service hub 302 is used below as an example of a multi-tenant service hub, method 600 can equally be performed from the perspective of any other device or controller in the network.

In block 602, method 600 receives, by a service hub (e.g., multi-tenant service hub 302) of a network, a request to onboard a tenant. The request can indicate a device VPN and a service label associated with a service chain of a set of service chains available to the device VPN. For example, if the tenant is onboarding a shared device, the set of service chains can be service chains available to any tenant on the shared device. In some examples, the request can include a tenant ID or tenant identifier.

In block 604, method 600 generates, by the service hub (e.g., multi-tenant service hub 302), a record in a mapping table associating a tenant VPN of the tenant with the service label and with the device VPN. The device VPN can be associated with a device being onboarded to the network and can be configured to be shared amongst two or more tenants.

In block 606, method 600 receives, by the service hub (e.g., multi-tenant service hub 302), a data packet from an edge device (e.g., edge network device 218) associated with the tenant.

In block 608, method 600 routes, by the service hub (e.g., multi-tenant service hub 302), the data packet based on the record associated with the tenant in the mapping table. As discussed above, packet metadata, packet header contents, the mapping table, and/or a flow table can be used to accurately and efficiently route packets to and from tenants hosted on a multi-tenant, or shared, device.

Method 600 can reduce overhead associated with operating and managing a service fabric in a network by eliminating the need to install additional equipment for every onboarded tenant of the service. The onboarding process is further streamlined through the availability of preset service chains on a shared device that can be selected by a tenant during onboarding. The tenant can optionally create their own, dedicated service chains available via the tenant's overlay, thereby allowing for tenant isolation and customization. Multi-tenant service hub 302 can support both provider-managed and tenant-managed service chains.

Additionally, as discussed above, several enhancements to both the control pane (e.g., control plane 212) and the data plane (e.g., data plane 216) of a network facilitate the resolution of traffic routing on multi-tenant devices both to and from a service using enhanced flow lookup and tenant context by the multi-tenant service hub 302. Multi-tenant service hub 302 can further leverage information or metadata associated with a shared tunnel to enable multi-tenant service hub 302 to identify a tenant ID and avoids adding tenant information in the packet inside the SDWAN overlay.

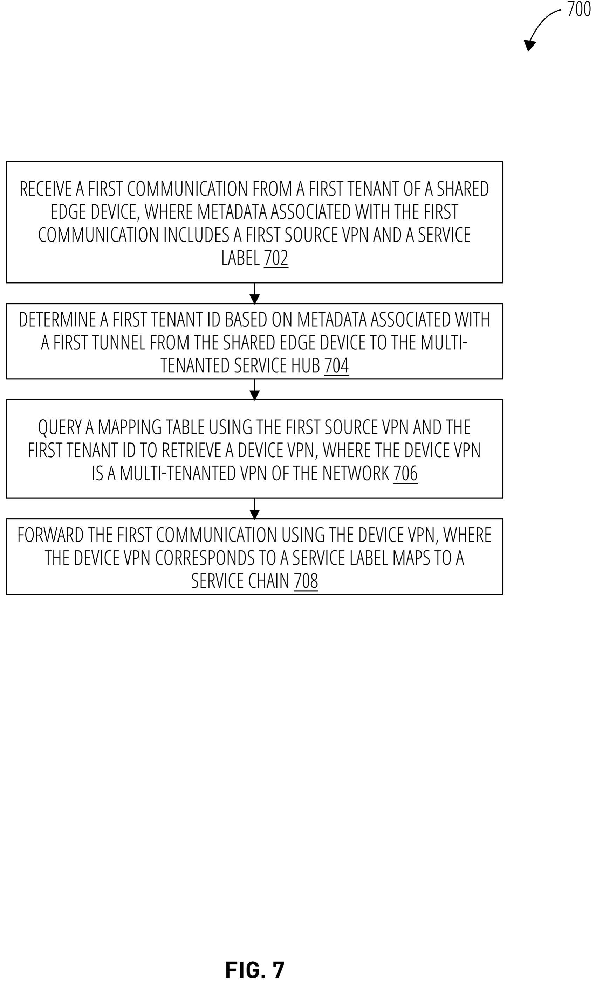

FIG. 7 will be described from the perspective of a multi-tenant service hub. It should be understood that such a multi-tenant service hub may have one or more memories having computer-readable instructions stored therein and one or more processors configured to execute the computer-readable instructions to perform steps of method 700 described below. Furthermore, while multi-tenant service hub 302 is used below as an example of a multi-tenant service hub, method 700 can equally be performed from the perspective of any other device or controller in the network.

According to some examples, at block 702, method 700 can include receiving, by the multi-tenanted service hub (e.g., multi-tenant service hub 302) of a network, a first communication from a first tenant of a shared edge device. Metadata associated with the first communication can include a first source VPN and a service label. In some examples, the metadata can be included in a header of a packet in the communication.

According to some examples, at block 704, method 700 can include determining, by the multi-tenanted service hub (e.g., multi-tenant service hub 302), a first tenant ID based on metadata associated with a first tunnel from the shared edge device to the multi-tenanted service hub. For example, tunnel metadata can include tenant information (e.g., the tenant ID). In some examples, the tunnel metadata can include transport attributes (e.g., attributes associated with a TLOC), such as a device type (e.g., shared or dedicated).

According to some examples, at block 706, method 700 can include querying, by the multi-tenanted service hub (e.g., multi-tenant service hub 302), a mapping table using the first source VPN and the first tenant ID to retrieve a device VPN. The device VPN is a multi-tenanted VPN of the network. In some examples, the combination of tenant ID and tenant VPN can be used as a unique key to determine the device VPN for a tenant using a shared VPN, thereby resolving ambiguities that can lead to issues in traffic routing.

According to some examples, at block 708, method 700 can include forwarding, by the multi-tenanted service hub (e.g., multi-tenant service hub 302), the first communication using the device VPN. In some examples, the device VPN corresponds to a service label that maps to a service chain. The service chain can either be dedicated for use by a single tenant or can be shared among tenants.

In an example, in which the service chain is shared, a second communication from a second tenant can be received at the multi-tenant service hub. The multi-tenant service hub can determine the tenant ID from a transport attribute of the tunnel between the second tenant of the shared edge device and the multi-tenant service hub and can determine the tenant VPN from the communication metadata. The multi-tenant service hub can then query the mapping table using the second tenant ID and the second tenant VPN to map the second tenant to a device VPN (e.g., a device VPN shared by the first and second tenants). In this example, the first and second tenants can also share the service chain.

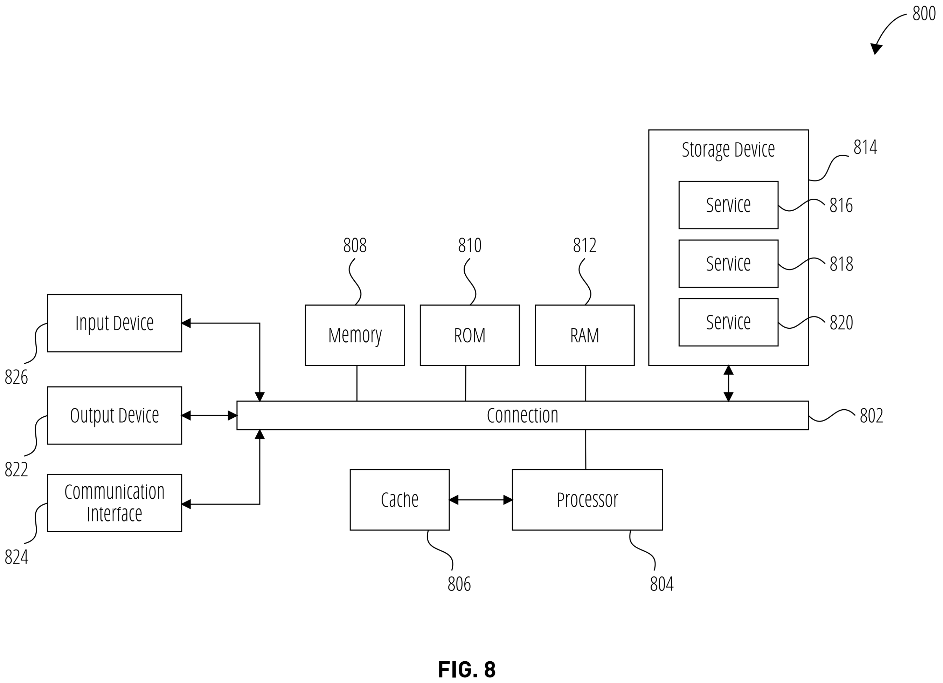

FIG. 8 illustrates an example network device in accordance with some aspects of the present disclosure. Example network device 800 can be any other device suitable for performing switching, routing, load balancing, and other networking operations, or any component of a computing device in which the components of the system are in communication with each other using connection 802. Connection 802 can be a physical connection via a bus, or a direct connection into processor 804, such as in a chipset architecture. Connection 802 can also be a virtual connection, networked connection, or logical connection.

Example network device 800 includes at least one processing unit (e.g., a CPU or a processor) such as processor 804 and connection 802 that couples various system components including system memory 808, read-only memory (ROM) such as ROM 810 and random access memory (RAM) such as RAM 812 to processor 804. Network device 800 can include a cache of high-speed memory 806 connected directly with, in close proximity to, or integrated as part of processor 804.

Processor 804 can include any general purpose processor and a hardware service or software service, such as service 816, service 818, and service 820 stored in storage device 814, configured to control processor 804 as well as a special-purpose processor where software instructions are incorporated into the actual processor design. Processor 804 may essentially be a completely self-contained computing system, containing multiple cores or processors, a bus, memory controller, cache, etc. A multi-core processor may be symmetric or asymmetric.

To enable user interaction, network device 800 includes an input device 826, which can represent any number of input mechanisms, such as a microphone for speech, a touch-sensitive screen for gesture or graphical input, keyboard, mouse, motion input, speech, etc. network device 800 can also include output device 822, which can be one or more of a number of output mechanisms known to those of skill in the art. In some instances, multimodal systems can enable a user to provide multiple types of input/output to communicate with network device 800. Network device 800 can include communication interface 824, which can generally govern and manage the user input and system output. There is no restriction on operating on any particular hardware arrangement, and therefore the basic features here may easily be substituted for improved hardware or firmware arrangements as they are developed.

Storage device 814 can be a non-volatile memory device and can be a hard disk or other types of computer readable media which can store data that are accessible by a computer, such as magnetic cassettes, flash memory cards, solid state memory devices, digital versatile disks, cartridges, random access memories (RAMs), read-only memory (ROM), and/or some combination of these devices.

Storage device 814 can include software services, servers, services, etc., that when the code that defines such software is executed by processor 804, it causes the system to perform a function. In some embodiments, a hardware service that performs a particular function can include the software component stored in a computer-readable medium in connection with the necessary hardware components, such as processor 804, connection 802, output device 822, etc., to carry out the function.

In summary, in one aspect, a method for routing traffic using a multi-tenanted service hub includes: receiving, by the multi-tenanted service hub of a network, a first communication from a first tenant of a shared edge device, where metadata associated with the first communication includes a first source VPN and a service label, determining, by the multi-tenanted service hub, a first tenant ID based on metadata associated with a first tunnel from the shared edge device to the multi-tenanted service hub, querying, by the multi-tenanted service hub, a mapping table using the first source VPN and the first tenant ID to retrieve a device VPN, where the device VPN is a multi-tenanted VPN of the network, and forwarding, by the multi-tenanted service hub, the first communication using the device VPN, where the device VPN corresponds to a service label maps to a service chain.

For clarity of explanation, in some instances, the present technology may be presented as including individual functional blocks including functional blocks comprising devices, device components, steps or routines in a method embodied in software, or combinations of hardware and software.

Any of the steps, operations, functions, or processes described herein may be performed or implemented by a combination of hardware and software services or services, alone or in combination with other devices. In some embodiments, a service can be software that resides in memory of a client device and/or one or more servers of a content management system and perform one or more functions when a processor executes the software associated with the service. In some embodiments, a service is a program or a collection of programs that carry out a specific function. In some embodiments, a service can be considered a server. The memory can be a non-transitory computer-readable medium.

In some embodiments, the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Methods according to the above-described examples can be implemented using computer-executable instructions that are stored or otherwise available from computer-readable media. Such instructions can comprise, for example, instructions and data which cause or otherwise configure a general purpose computer, special purpose computer, or special purpose processing device to perform a certain function or group of functions. Portions of computer resources used can be accessible over a network. The executable computer instructions may be, for example, binaries, intermediate format instructions such as assembly language, firmware, or source code. Examples of computer-readable media that may be used to store instructions, information used, and/or information created during methods according to described examples include magnetic or optical disks, solid-state memory devices, flash memory, USB devices provided with non-volatile memory, networked storage devices, and so on.

Devices implementing methods according to these disclosures can comprise hardware, firmware and/or software, and can take any of a variety of form factors. Typical examples of such form factors include servers, laptops, smartphones, small form factor personal computers, personal digital assistants, and so on. The functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are means for providing the functions described in these disclosures.

For clarity of explanation, in some instances the present technology may be presented as including individual functional blocks including functional blocks comprising devices, device components, steps or routines in a method embodied in software, or combinations of hardware and software.

Any of the steps, operations, functions, or processes described herein may be performed or implemented by a combination of hardware and software services or services, alone or in combination with other devices. In some embodiments, a service can be software that resides in memory of a client device and/or one or more servers of a content management system and perform one or more functions when a processor executes the software associated with the service. In some embodiments, a service is a program, or a collection of programs that carry out a specific function. In some embodiments, a service can be considered a server. The memory can be a non-transitory computer-readable medium.

In some embodiments the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Methods according to the above-described examples can be implemented using computer-executable instructions that are stored or otherwise available from computer readable media. Such instructions can comprise, for example, instructions and data which cause or otherwise configure a general purpose computer, special purpose computer, or special purpose processing device to perform a certain function or group of functions. Portions of computer resources used can be accessible over a network. The computer executable instructions may be, for example, binaries, intermediate format instructions such as assembly language, firmware, or source code. Examples of computer-readable media that may be used to store instructions, information used, and/or information created during methods according to described examples include magnetic or optical disks, solid state memory devices, flash memory, USB devices provided with non-volatile memory, networked storage devices, and so on.

Devices implementing methods according to these disclosures can comprise hardware, firmware and/or software, and can take any of a variety of form factors. Typical examples of such form factors include servers, laptops, smart phones, small form factor personal computers, personal digital assistants, and so on. Functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are means for providing the functions described in these disclosures.

Although a variety of examples and other information was used to explain aspects within the scope of the appended claims, no limitation of the claims should be implied based on particular features or arrangements in such examples, as one of ordinary skill would be able to use these examples to derive a wide variety of implementations. Further and although some subject matter may have been described in language specific to examples of structural features and/or method steps, it is to be understood that the subject matter defined in the appended claims is not necessarily limited to these described features or acts. For example, such functionality can be distributed differently or performed in components other than those identified herein. Rather, the described features and steps are disclosed as examples of components of systems and methods within the scope of the appended claims.

## Claims

1. A method for routing traffic using a multi-tenanted service hub comprising:
receiving, by the multi-tenanted service hub of a network, a first communication from a first tenant of a shared edge device, wherein metadata associated with the first communication comprises a first source VPN and a service label;
determining, by the multi-tenanted service hub, a first tenant ID based on metadata associated with a first tunnel from the shared edge device to the multi-tenanted service hub;
querying, by the multi-tenanted service hub, a mapping table using the first source VPN and the first tenant ID to retrieve a device VPN, wherein the device VPN is a multi-tenanted VPN of the network; and
forwarding, by the multi-tenanted service hub, the first communication using the device VPN, wherein the device VPN corresponds to a service label maps to a service chain.

2. The method of claim 1, wherein the service chain is shared by a set of tenants of the shared edge device.

3. The method of claim 2, further comprising:
receiving, by the multi-tenanted service hub, a second communication from a second tenant of the shared edge device, wherein metadata associated with the second communication comprises a second source VPN and the service label;
determining, by the multi-tenanted service hub, a second tenant ID based on metadata associated with a second tunnel from the shared edge device to the multi-tenanted service hub;
querying, by the multi-tenanted service hub, the mapping table using the second source VPN and the second tenant ID to retrieve the device VPN; and
forwarding, by the multi-tenanted service hub, the second communication based on the service chain using the device VPN.

4. The method of any of claims 1 to 3, wherein the mapping table comprises an edge device type attribute, wherein a value of the edge device type attribute indicates whether an edge device of the network is shared among multiple tenants.

5. The method of any of claims 1 to 4, wherein metadata associated with a tunnel between an edge device and the multi-tenanted service hub comprises a transport attribute, wherein a value of the transport attribute indicates whether the edge device is shared among multiple tenants.

6. The method of any of claims 1 to 5, further comprising:
storing, by the multi-tenanted service hub in a flow table, a record associated with the first communication wherein the record comprises the device VPN, the first source VPN, and the first tenant ID; and
embedding, by the multi-tenanted service hub, the device VPN as a source VPN in the metadata associated with the first communication.

7. The method of claim 6, further comprising:
receiving, by the multi-tenanted service hub, a third communication from a service of the network in response to the first communication, wherein metadata associated with the third communication comprises the first tenant ID and the device VPN;
querying, by the multi-tenanted service hub, the flow table using the device VPN and the first tenant ID to retrieve the first source VPN; and
forwarding, by the multi-tenanted service hub, the third communication using the first tenant VPN.

8. The method of any of claims 1 to 7, further comprising:
receiving, by the multi-tenanted service hub, a request to onboard the first tenant, wherein the request is to associate the first tenant with the device VPN; and
storing, by the multi-tenanted service hub, a tenant record in the mapping table associating the first source VPN and the first tenant ID with the device VPN.

9. A multi-tenanted service hub of a network comprising:
means for receiving a first communication from a first tenant of a shared edge device, wherein metadata associated with the first communication comprises a first source VPN and a service label;
means for determining a first tenant ID based on metadata associated with a first tunnel from the shared edge device to the multi-tenanted service hub;
means for querying a mapping table using the first source VPN and the first tenant ID to retrieve a device VPN, wherein the device VPN is a multi-tenanted VPN of the network; and
means for forwarding the first communication using the device VPN, wherein the device VPN corresponds to a service label maps to a service chain.

10. The multi-tenanted service hub of claim 9, wherein the service chain is shared by a set of tenants of the shared edge device.

11. The multi-tenanted service hub of claim 10, further comprising:
means for receiving a second communication from a second tenant of the shared edge device, wherein metadata associated with the second communication comprises a second source VPN and the service label;
means for determining a second tenant ID based on metadata associated with a second tunnel from the shared edge device to the multi-tenanted service hub;
means for querying, the mapping table using the second source VPN and the second tenant ID to retrieve the device VPN; and
means for forwarding the second communication based on the service chain using the device VPN.

12. The multi-tenanted service hub of any of claims 9 to 11, wherein the mapping table comprises an edge device type attribute, wherein a value of the edge device type attribute indicates whether an edge device of the network is shared among multiple tenants.

13. The multi-tenanted service hub of any of claims 9 to 12, wherein metadata associated with a tunnel between an edge device and the multi-tenanted service hub comprises a transport attribute, wherein a value of the transport attribute indicates whether the edge device is shared among multiple tenants.

14. The multi-tenanted service hub of any of claims 9 to 13, further comprising:
means for storing, in a flow table, a record associated with the first communication wherein the record comprises the device VPN, the first source VPN, and the first tenant ID; and
means for embedding the device VPN as a source VPN in the metadata associated with the first communication;
the multi-tenanted service hub optionally further comprising:
means for receiving a third communication from a service of the network in response to the first communication, wherein metadata associated with the third communication comprises the first tenant ID and the device VPN;
means for querying the flow table using the device VPN and the first tenant ID to retrieve the first source VPN; and
means for forwarding the third communication using the first tenant VPN.

15. A computer program, computer program product or computer readable medium comprising instructions which, when executed by a computer, cause the computer to carry out the steps of the method of any of claims 1 to 8.
